# EUROPÄISCHE PATENTSCHRIFT

(11) **EP 0 824 139 B1**
(45) Veröffentlichungstag und Bekanntmachung des Hinweises auf die Patenterteilung: **01.12.1999**
(21) Anmeldenummer: 97113744.3
(22) Anmeldetag: 08.08.1997
(51) Int. Cl.: C09J 167/02, C08G 63/672

(54) **Copolyetheresterschmelzklebemassen**
Copolyetherester hot melt adhesive compositions
Colles fusibles de copolyétherester

(30) Priorität: 12.08.1996 DE 19632473
(43) Veröffentlichungstag der Anmeldung: 18.02.1998
(73) Patentinhaber: EMS-INVENTA AG, 8002 Zürich (CH)
(72) Erfinder: Kinkelin, Eberhard, Dr.rer.nat., 7000 Chur (CH); Spindler, Jürgen, Dr.rer.nat., 7013 Domat/Ems (CH); Poessnecker, Gerhard, Dr.rer.nat., 7014 Trin (CH)
(74) Vertreter: Becker, Eberhard, Dr.

(56) Entgegenhaltungen:
- DE-A- 3 132 059
- FR-A- 2 148 537
- PATENT ABSTRACTS OF JAPAN vol. 008, no. 093 (C-220), 27.April 1984 & JP 59 011383 A (TOYO BOSEKI KK), 20.Januar 1984,

## Beschreibung

Die Erfindung betrifft thermoplastische Copolyetherester für Schmelzklebeanwendungen.

Die Erfindung befasst sich speziell mit linearen oder verzweigten, schnellkristallisierenden und hochflexiblen Copolyetherestern auf der Basis von Terephthalsäure, 1,4-Butandiol (BDO), Diethylenglykol (DEG), bzw. einem Gemisch aus Diethylenglykol (DEG) und Triethylenglykol (TEG) und einem Polyethylenglykol (PEG) mit einem mittleren Molekulargewicht von 600 - 4000 g/mol.
Diese Polyetherester dienen als Schmelzklebemassen für technische und textile Anwendungen.

Der Einsatz von unterschiedlichen Copolyestern und Copolyetherestern ist bereits vielfach in der Literatur beschrieben.

EP-A-204 528 beschreibt Copolyester-Folien für die Nahrungsmittelverpackungen aus einem Copolyester mit mindestens 85 Mol-% Terephthalsäure (TPS), 65 bis 97 Mol-% Butandiol (BDO) und 3 bis 35 Mol-% eines Polyethylenglykols (PEG) mit einer Molmasse von zwischen 106 und 550 g/Mol. Der Schmelzpunkt bei diesen Produkten liegt zwischen 160 und 200°C. Schmelzkleber mit so hohen Schmelzpunkten sind für den Einsatz im Textilbereich unbrauchbar.

DE-A-31 32 059 beschreibt ein Polyetherestersystem zum Verkleben von Textilien, bestehend aus Terephthalsure (TPS), Osphthalsäure (IPS), Butandiol und 10-25% eines Polyalkylenetherdiols mit einer Molmasse von 400-600 g/mol und mit einem Schmelzpunkt von 95-125°C.

Auch JP 54/153835 beschreibt einen Hotmeltkleber für Fasern aus TPS, IPS, Butandiol und 1-10 % Polyalkylenglykol mit einem Molekulargewicht von 300-6000 g/mol.
In diesen beiden Dokumenten wird zur Absenkung des Schmelzpunktes IPS eingesetzt, das die Kristallisationseigenschaften deutlich verschlechtert.

In DE-A-28 29 375 wird ein thermoplastischer Mischpolyester beschrieben, bestehend aus TPS, einer weiteren Säure, 15-30 Mol-% Ethylenglykol, Diethylenglykol und 0.5-5 Mol-% Polybutylenglykol. Hier werden explizit eine gewisse Menge an Ethylenglykol und speziell Polybutylenglykol gefordert.

DE-A-44 30 048 beschreibt einen Copolyester aus TPS, IPS, Butandiol und einem Gemisch aus Diethylenglykol und Triethylenglykol, wobei der Schmelzpunkt zwischen 60° und 130°C liegt.

DE-A-27 25 709 schliesslich beschreibt thermoplastische Blockmischpolymere aus TPS, Butandiol und 1-7 %, bezogen auf PBT, Polyether mit Molekulargewicht von 600-6000 g/mol. In diesem Patent werden spezielle Polymerblöcke im Gegensatz zur statistischen Verteilung eingesetzt.

In der EP-A-0 164 910 werden Copolyester-Folien und Schmelzklebemassen beschrieben, die in diesen Folien enthalten sind. Die Copolyesterschmelzkleber weisen als Komponenten 80 bis 97 Mol-% Terephthalsäure und 3 bis 20 Mol-% Isophthalsäure und als Diolkomponente 60 bis 85 Mol-% 1,4-Butandiol und 15 bis 40 Mol-% Diethylenglykol auf. Der Schmelzpunkt der dortigen Copolyester liegt im Bereich von 160 bis 200°C.

Alle diese obengenannten Patente haben wesentliche substantielle Nachteile und führen nicht zu thermoplastische Copolyetheresterschmelzklebemassen mit hoher Kristallisationsgeschwindigkeit und hoher Flexibilität, die als Schmelzkleber in technischen Anwendungen für schwierige Substrate eingesetzt werden können.

Ziel der vorliegenden Erfindung war die Entwicklung von relativ niedrigschmelzenden, schnellkristallisierenden und hochflexiblen Produkten für Hotmelt-Klebeanwendungen.

Der Vorteil eines niedrigen Schmelzpunktes liegt vor allem in der Möglichkeit, niedere Applikationstemperaturen anwenden zu können. Dies ist vor allem wichtig in dem Bereich der technischen Verklebungen, wenn Substrate, wie z.B. gewisse Kunststoffe, eingesetzt werden, die Schmelztemperaturen unterhalb von 150°C haben.

Der Einsatz eines Copolyesters mit hoher Kristallisationsgeschwindigkeit bietet sich aus verschiedenen Gründen an. Die Bildung von kristallinen Bereichen ist Voraussetzung für die mechanische Festigkeit eines Polymeren oberhalb der Glastemperatur. Je schneller sich also diese kristallinen Domänen ausbilden können, desto eher ist die Verklebungsstelle mechanisch belastbar. Des weiteren ist die Oberflächenklebrigkeit eines polymeren Schmelzklebers direkt von dessen Kristallisation abhängig. Je geringer die Tendenz zur Kristallisation, desto länger bleiben z.B. beschichtete Folien klebrig. Dies bringt beispielsweise beim Aufrollen dieser Folien Schwierigkeiten mit sich, da die einzelnen Lagen leicht miteinander verkleben können und dadurch die ganze Rolle unbrauchbar wird. Dieser Effekt lässt sich zwar durch Auftragen einer sog. Trägerfolie, die den aufgetragenen Kleber von der nächsten Schicht trennt, umgehen. Vor Verpressen mit dem weiteren Substrat muss diese Folie allerdings entfernt werden, was zu Mehraufwand und vor allem zu Abfall führt. Eine andere Möglichkeit sind zeit- und energieaufwendige Temperungsprozeduren, die natürlich ebenso für den ganzen Produktionsprozess von erheblichem Nachteil sind.
Bei Einsatz eines schnellkristallisierenden Polymeren entfallen all diese Schritte.

Der Vorteil von hochflexiblen Produkten liegt in vielerlei Hinsicht auf der Hand. Einerseits können bei Verklebungen im technischen Bereich, abhängig vom Substrat, nur mit flexiblen Klebmassen ausreichende Haftungswerte und Beständigkeiten erreicht werden.

Zum andern können beschichtete und verklebte Teile nachträglich noch Spannungen und Deformationen ausgesetzt werden, bei denen herkömmliche Kleber ihre Haftungseigenschaften verlieren und zu Substratablösungen führen. In diesen Fällen ist ein hochflexibler Klebstoff die einzige Möglichkeit, eine dauerhafte Verbindung von Werkstoffen herzustellen.

Aufgabe der Erfindung ist daher, durch geeignete Kombination von Rohstoffen die drei geforderten Eigenschaften "Relativ niederer Schmelzpunkt", "Hohe Kristallisationsgeschwindigkeit" und "Hohe Flexibilität" in Einklang zu bringen und neue Schmelzklebemassen aus einem statistisch aufgebauten Copolyetherester auf Basis von Terephthalsäure und einem Gemisch von aliphatischen Diolen bereitzustellen.

Diese Aufgabe wird durch die schnellkristallisierenden und hochflexiblen Copolyetheresterschmelzklebemassen gemäß Anspruch 1 gelöst. In Anspruch 8 sind spezielle Anwendungen der erfindungsgemäßen Schmelzklebemassen angegeben.

In den Unteransprüchen sind spezielle Ausführungsformen der Erfindung enthalten.

Die Lösung vorgenannter Aufgabe liegt insbesondere in Schmelzklebemassen aus statistisch zusammengesetztem Copolyetherester mit einer Kombination von Butandiol (BDO), Diethylenglykol (DEG) und Polyethylenglykol (PEG) und wahlweise anderen linearen oder verzweigten aliphatischen Diolen und Terephthalsäure (TPS) als einziger Säurekomponente. Die Viskosität sollte bei diesen hochflexiblen Produkten vorzugsweise über 200 Pa*s bei 190°C liegen.

Bei alleiniger Verwendung von Terephthalsäure als Säurekomponente liegen im allgemeinen die Schmelzpunkte weit über dem gewünschten Bereich. Eine Herabsetzung des Schmelzpunktes ist durch einen Teilersatz der Terephthalsäure durch eine andere Säure, wie z.B. Isophthalsäure (IPS) möglich. Eine solche Kombination verschlechtert aber die Kristallinität bzw. die Kristallisationsgeschwindigkeit in erheblichem Masse.
Überraschenderweise lässt sich in der vorliegenden Erfindung durch den Einsatz von Diethylenglykol als Codiolkomponente bzw. einer Mischung aus Diethylenglykol und Triethylenglykol der Schmelzpunkt um über 80° absenken unter gleichzeitiger Beibehaltung der hohen Kristallisationsgeschwindigkeit.

Obwohl schon durch den Einsatz von niedermolekularen Etherdiolen eine gewisse Flexibilität des Polymeren erreicht wird, ist das Ziel, ein hochflexibles Polymeres herzustellen, nur durch den gleichzeitigen Einsatz eines höhermolekularen Etherdiols, wie z.B. Polyethylenglykol 600 zu erreichen.

Obwohl auf dem Gebiet der Klebstoffe eine Vielzahl von Patenten existiert, ist die Monomerkombination des vorliegenden Patentes noch nie beschrieben und in seiner Kombination und den erzielten Eigenschaften einzigartig.

So wird zwar in der EP-A-204 528 ein Copolyesterfilm beschrieben, der aus 85-100 % TPS, 65-97 % Butandiol und 3-35 Mol-% Polyethylenglykol mit einem Molekulargewicht von 106-550 g/mol besteht und einen Schmelzpunkt von 160°-200°C aufweist. Im Vergleich zur vorliegenden Erfindung schließt der Molekulargewichtsbereich des Polyethylenglykols das erfindungsgemäße Polyethylenglykol nicht ein und der Schmelzbereich liegt aufgrund der Anwendung für Klebefilme zu hoch.

Für die erfindungsgemässen Copolyetheresterschmelzklebemassen wird als Säurekomponente allein Terephthalsäure eingesetzt.
Der molare Anteil an Butandiol liegt zwischen 40 und 70 Mol-%, bezogen auf die Gesamtdiolmenge, während der Anteil an Diethylenglykol zwischen 10 und 50 Mol-% und wahlweise der Anteil an Triethylenglykol zwischen 0 und 35 Mol-% beträgt. Als höhermolekulare Polyethylenglykolkomponente wird ein Polyethylenglykol mit einer Molmasse von 600-4000 g/mol in der Menge von 2-10 Mol-% eingesetzt. Der Anteil an Butandiol kann sich um bis zu 3 Mol-% reduzieren, wenn zur Erhöhung des Molekulargewichts des Polymeren eine mehrwertige Alkoholkomponente eingesetzt wird wie z.B. Trimethylolpropan oder gegebenenfalls auch ein β-Hydroxyalkylamid.

Die Schmelzpunkte der erfindungsgemässen Copolyetheresterschmelzklebemassen liegen zwischen 90 und 190°C, vorzugsweise zwischen 100 und 180°C. Die Schmelzviskosität, gemessen bei 190°C und 2,16 kg Belastung nach DIN/ISO 1133 liegt nicht unter 100 Pa*s, vorzugsweise nicht unter 200 Pa*s.

Die erfindungsgemässen Vorteile beruhen auf der besonderen und nirgends beschriebenen Wirkung der Kombination von TPS, Butandiol, Diethylenglykol, wahlweise zum Teil ersetzt durch Triethylenglykol und höhermolekularem Polyethylenglykol, die einerseits den Schmelzpunkt in den gewünschten Bereich verschiebt, andererseits auch für die hohe Kristallisationsgeschwindigkeit und besonders für die extrem hohe Flexibilität verantwortlich ist.

Die erfindungsgemässen Copolyetheresterschmelzklebemassen kommen aufgrund ihrer Flexibilität hauptsächlich im Hotmeltverfahren zur Anwendung, können aber auch in den bekannten pulverförmigen Beschichtungsverfahren eingesetzt werden.

In folgenden Beispielen sollen die erfindungsgemässen Copolyetherester mit anderen Produkten verglichen werden, wobei das Beispiele 9 als Vergleichsbeispiel dient, das nicht von der vorliegenden Erfindung abgedeckt wird.

Die Schmelzpunkte, Glastemperaturen und Kaltkristallisationspunkte wurden mit einem DSC-Gerät der Fa. duPont Typ 1090B durchgeführt. Als Schmelzpunkt wird das Maximum des Schmelzpeaks angenommen, als Glastemperatur die Mitte der beiden Basislinien. Als Kaltkristallisationspunkt gilt das Maximum des Kristallisationspeaks beim 2. Aufheizen der Probe im DSC.

Die Schmelzviskosität wurde nach dem Auslaufverfahren bei 190°C und einer Belastung von 2,16 kg nach DIN/ISO 1133 bestimmt.

### Beispiel 1

In einem 10-l-Veresterungsreaktor, versehen mit Temperaturfühler, Rührer, Rückflusskolonne und Destillationsbrücke werden 1,37 kg (1,52 Mol) Butandiol, 0,98 kg (0,93 Mol) Diethylenglykol und 0,89 kg (0,15 Mol) Polyethylenglykol mit einem mittleren Molekulargewicht von 600 vorgelegt und bei 140°C unter einer während der ganzen Reaktion aufrechtgehaltenen Stickstoffatmosphäre aufgeschmolzen. Unter Rühren werden dann 3,08 kg (1,85 Mol) Terephthalsäure und 3 g Veresterungskatalysator zugegeben. Nach schrittweiser Erhöhung der Innentemperatur auf 235°C wird die Reaktion solange fortgesetzt, bis kein Destillat mehr entsteht. Anschliessend werden erneut 6 g Veresterungskatalysator und 3 g Hitzestabilisator zugegeben. Die Temperatur wird auf 250°C erhöht und schrittweise Vakuum angelegt, bis ein Endvakuum von < 1 mbar erreicht ist. Die Kondensation wird mindestens 2 Stunden fortgesetzt, bis die gewünschte Viskosität erreicht ist.
Der erhaltene Polyester hat nach 24-stündiger Trocknung bei 60°C einen Schmelzpunkt von ca. 157°C, einen TG von ca. 0°C und eine Schmelzviskosität, gemessen bei 190°C und 2,16 kg Belastung, von 400 Pa*s.

### Beispiel 2-8 und Vergleichsbeispeil 9

Die Polyester wurden analog dem Beispiel 1 hergestellt und sind in den Tabelle 1 und 2 zusammengefasst.
Die DSC-Messungen wurden an vorgetrocknetem Material (24h/70°C) durchgeführt.

**Tabelle 1**

| | 1 | 2 | 3 | 4 | 5 |
|---|---|---|---|---|---|
| Terephthalsäure (Mol-%) | 100 | 100 | 100 | 100 | 100 |
| Butandiol (Mol-%) | 57 | 52 | 60 | 64 | 67 |
| Diethylenglykol (Mol-%) | 35 | 40 | 32 | 28 | 25 |
| Triethylenglykol (Mol-%) | | | | | |
| Polyethylenglykol 600 (Mol-%) | 8 | 8 | 8 | 8 | 8 |
| Schmelzpunkt (DSC, °C) | 157 | 120 | 168 | 176 | 186 |
| Glastemperatur (DSC, °C) | 0 | 1 | 4 | 1 | 5 |
| Kaltkristallisationspkt. (DSC,°C) | 24 | 42 | 27 | 22 | 29 |
| Schmelzviskosität 190° (Pa*s) | 400 | 950* | 295 | 410 | 440 |

| | | | | | |
|---|---|---|---|---|---|
| * gemessen bei 160°C/2,16 kg | | | | | |

**Tabelle 2**

| | 6 | 7 | 8 | 9***) |
|---|---|---|---|---|
| Terephthalsäure (Mol-%) | 100 | 100 | 100 | 100 |
| Butandiol (Mol-%) | 45 | 52 | 52 | 92 |
| Diethylenglykol (Mol-%) | 45 | 14 | 7 | |
| Triethylenglykol (Mol-%) | | 26 | 33 | |
| Polyethylenglykol 600 (Mol-%) | 10 | 8 | 8 | 8 |
| Schmelzpunkt (DSC, °C) | 144 | 107 | 108 | 209 |
| Glastemperatur (DSC, °C) | -3 | -3 | -5 | |
| Kaltkristallisationspkt. (DSC,°C) | 28 | 45 | 48 | 50 |
| Schmelzviskosität 190° (Pa*s) | 124 | 850* | 750* | 100** |

| | | | | |
|---|---|---|---|---|
| * gemessen bei 160°C/2,16 kg | | | | |
| ** gemessen bei 230°C/2,16 kg | | | | |
| *** zum Vergleich | | | | |

## Patentansprüche

1. Schmelzklebemassen aus einem statistisch aufgebauten Copolyetherester auf Basis von Terephthalsäure und einem Gemisch von aliphatischen Diolen, dadurch gekennzeichnet, daß Terephthalsäure als einzige Säurekomponente eingesetzt wird und ihr molarer Anteil, bezogen auf die Gesamtsäuremenge bei 100 Mol-% liegt, daß als Diolkomponente eine Kombination von Butandiol, Diethylenglykol, Polyethylenglykol und gegebenenfalls Triethylenglykol vorliegt, wobei der molare Anteil an Butandiol weniger als 75 Mol-% beträgt, der Anteil an Diethylenglykol zwischen 5 und 60 Mol-% liegt, der Anteil an Triethylenglykol zwischen 0 und 40 Mol-% liegt und mindestens 2 und höchstens jedoch 10 Mol-% einer höhermolekularen Polyethylenglykolkomponente mit einer Molmasse von 600-4000 g/mol eingesetzt wird, bezogen auf die Gesamtsäure- und Gesamtdiolmenge von jeweils 100 Mol-%, und der Schmelzpunkt der Copolyetheresterschmelzklebemassen zwischen 90° und 190°C liegt.

2. Copolyetheresterschmelzklebemassen gemäß Anspruch 1, dadurch gekennzeichnet, daß der molare Anteil an Butandiol vorzugsweise zwischen 40 und 70 Mol-% liegt, bezogen auf die Gesamtdiolmenge von 100 Mol-%.

3. Copolyetheresterschmelzklebemassen gemäß Anspruch 1 und 2, dadurch gekennzeichnet, daß der molare Anteil an Diethylenglykol vorzugsweise zwischen 10 und 50 Mol-% und der molare Anteil an Triethylenglykol vorzugsweise zwischen 0 und 35 Mol-% liegt, bezogen auf die Gesamtdiolmenge von 100 Mol-%.

4. Copolyetheresterschmelzklebemassen gemäß einem oder mehreren der Ansprüche 1 bis 3, dadurch gekennzeichnet, daß bei gleichzeitigem Einsatz von Diethylenglykol und Triethylenglykol das molare Verhältnis von Diethylenglykol zu Triethylenglykol vorzugsweise zwischen 5 : 1 und 1 : 3 liegt.

5. Copolyetheresterschmelzklebemassen gemäß einem oder mehreren der Ansprüche 1 bis 4, dadurch gekennzeichnet, daß zur Erhöhung der Schmelzviskosität ein drei- oder mehrwertiges Diol bis höchsten 3 Mol-%, bezogen auf die Gesamtdiolmenge eingesetzt werden kann.

6. Copolyetheresterschmelzklebemassen gemäß einem oder mehreren der Ansprüche 1 bis 5, dadurch gekennzeichnet, dass ihr Schmelzpunkt zwischen 100° und 180°C liegt.

7. Copolyetheresterschmelzklebemassen gemäß einem oder mehreren der Ansprüche 1 bis 6, dadurch gekennzeichnet, daß die Schmelzviskosität, gemessen bei 190°C und 2,16 kg Belastung nach ISO/DIN 1133 nicht unter 100 Pas, vorzugsweise nicht unter 200 Pas liegt.

8. Verwendung der Copolyetheresterschmelzklebemassen gemäß einem der vorhergehenden Ansprüche 1 bis 7 für das Hotmelt-Verfahren oder für die bekannten pulverförmigen Beschichtungsverfahren.

## Claims

1. Hot melt adhesive compositions formed from a statistically built-up copolyether ester based on terephthalic acid and a mixture of aliphatic diols, characterised in that terephthalic acid is used as the single acidic component, and its molar proportion, relative to the total quantity of acid, is 100 mol.%, in that a combination of butane diol, diethylene glycol, polyethylene glycol and possibly triethylene glycol is present as the diol component, the molar proportion of butane diol amounting to less than 75 mol.%, the proportion of diethylene glycol lying between 5 and 60 mol.%, the proportion of triethylene glycol lying between 0 and 40 mol.%, and at least 2 mol.% and at most, however, 10 mol.% of a higher molecular polyethylene glycol component being used with a molar composition of 600-4000 g/mol, relative to the total quantity of acid and total quantity of diol of 100 mol.% each, and the melting point of the copolyether ester hot melt adhesive compositions lying between 90° and 190°C.

2. Copolyether ester hot melt adhesive compositions according to claim 1, characterised in that the molar proportion of butane diol lies preferably between 40 and 70 mol.%, relative to the total quantity of diol of 100 mol.%.

3. Copolyether ester hot melt adhesive compositions according to claims 1 and 2, characterised in that the molar proportion of diethylene glycol lies preferably between 10 and 50 mol.%, and the molar proportion of triethylene glycol lies preferably between 0 and 35 mol.%, relative to the total quantity of diol of 100 mol.%.

4. Copolyether ester hot melt adhesive compositions according to one or more of claims 1 to 3, characterised in that, with a simultaneous use of diethylene glycol and triethylene glycol, the molar ratio of diethylene glycol to triethylene glycol lies preferably between 5 : 1 and 1 : 3.

5. Copolyether ester hot melt adhesive compositions according to one or more of claims 1 to 4, characterised in that, to increase the melting viscosity, a trivalent or polyvalent diol can be used up to a maximum 3 mol.%, relative to the total quantity of diol.

6. Copolyether ester hot melt adhesive compositions according to one or more of claims 1 to 5, characterised in that their melting point lies between 100° and 180°C.

7. Copolyether ester hot melt adhesive compositions according to one or more of claims 1 to 6, characterised in that the melting viscosity, measured at 190° C and with a 2.16 kg loading in accordance with ISO/DIN 1133, does not lie below 100 Pas, preferably not below 200 Pas.

8. Use of the copolyether ester hot melt adhesive compositions according to one of the preceding claims 1 to 7 for the hot melt method or for the known pulverulent coating methods.

## Revendications

1. Masses de colles fusibles composées d'un ester de copolyéther de structure statique à base d'acide téréphtalique et d'un mélange de diols aliphatiques, caractérisées en ce que de l'acide téréphtalique est utilisé en tant qu'unique composé acide et que sa proportion molaire rapportée à la quantité totale d'acide est de 100 % en moles, en ce que le composé diol est une combinaison de butanediol, de diéthylèneglycol, de polyéthylèneglycol, et le cas échéant de triéthyléneglycol, la proportion molaire en butanediol étant inférieure à 75 % en moles, la proportion en diéthylèneglycol étant comprise entre 5 et 60 % en moles, la proportion en triéthyléneglycol étant comprise entre 0 et 40 % en moles, et en ce qu'il est utilisé au moins 2, et cependant au plus 10 % en moles, d'un composé de polyéthyléneglycol de poids moléculaire plus élevé d'une masse molaire de 600 à 4.000 g/mole rapportés aux quantités totales respectives d'acide et de diols de 100 % en moles, et en ce que le point de fusion des masses de colles d'ester de copolyéther se situe entre 90 °C et 190 °C.

2. Masses de colles fusibles d'ester de copolyéther selon la revendication 1, caractérisées en ce que la proportion molaire en butanediol est de préférence située entre 40 à 70 % en moles rapportée à la quantité totale de diols de 100 % en moles.

3. Masses de colles fusibles d'ester de copolyéther selon l'une des revendications 1 et 2, caractérisées en ce que la proportion molaire en diéthylèneglycol est de préférence comprise entre 10 et 50 % en moles, et la proportion molaire en triéthylèneglycol de préférence entre 0 et 35 % en moles, rapportées à la quantité totale de diols de 100 % en moles.

4. Masses de colles fusibles d'ester de copolyéther selon l'une ou plusieurs des revendications 1 à 3, caractérisées en ce que, en cas d'utilisation simultanée de diéthylèneglycol et de triéthylèneglycol, le rapport molaire entre le diéthylèneglycol et le triéthyléneglycol est de préférence compris entre 5 : 1 et 1 : 3.

5. Masses de colles fusibles d'ester de copolyéther selon l'une ou plusieurs des revendications 1 à 4, caractérisées en ce que pour l'augmentation de la viscosité de fusion, un diol trivalent ou polyvalent peut être utilisé à hauteur de 3 % en moles maximum rapportés à la quantité totale de diols.

6. Masses de colles fusibles d'ester de copolyéther selon l'une ou plusieurs des revendications 1 à 5, caractérisées en ce que leur point de fusion se situe entre 100° et 180 °C.

7. Masses de colles fusibles d'ester de copolyéther selon l'une ou plusieurs des revendications 1 à 6, caractérisées en ce que la viscosité de fusion mesurée à 190 °C et à une charge de 2,16 kg d'après ISO/-DIN 1133 n'est pas inférieure à 100 Pas, de préférence pas inférieure à 200 Pas.

8. Utilisation des masses de colles fusibles d'ester de copolyéther selon l'une quelconque des revendications 1 à 7 pour le procédé hotmelt, ou pour les procédés de revêtements pulvérulents connus.
